# FASCICULE DE BREVET EUROPEEN

(11) **EP 1 097 308 B1**
(45) Date de publication et mention de la délivrance du brevet: **23.04.2003**
(21) Numéro de dépôt: 99927642.1
(22) Date de dépôt: 09.07.1999
(51) Int. Cl.: F16B 12/08, F16B 12/44, A47B 3/06, A47B 3/12, A47B 47/04, A47C 4/02, A47C 23/06, A47C 19/00

(54) **MEUBLE COMPORTANT UN ENSEMBLE D'ELEMENTS RIGIDES ASSEMBLES**
MÖBELSTÜCK MIT EINER EINHEIT VON ZUSAMMENGEBAUTEN STEIFEN ELEMENTEN
FURNITURE COMPRISING A SET OF ASSEMBLED OF RIGID ELEMENTS

(30) Priorité: 10.07.1998 CH 148398; 16.09.1998 CH 189398
(43) Date de publication de la demande: 09.05.2001
(73) Titulaire: Roeslin, Bernard Philippe, 1093 La Conversion (CH)
(72) Inventeur: Roeslin, Bernard Philippe, 1093 La Conversion (CH)
(74) Mandataire: Ganguillet, Cyril
(86) Numéro de dépôt international: CH9900316
(87) Numéro de publication internationale: WO00003147

(56) Documents cités:
- WO-A-97/36520
- DE-C- 611 017
- DE-U- 9 307 583
- DE-U- 29 713 792
- FR-A- 2 693 887
- US-A- 2 235 290
- US-A- 4 129 332
- US-A- 4 582 002
- US-A- 4 827 543

## Description

La présente invention concerne les meubles comportant un ensemble d'éléments rigides assemblés de manière à pouvoir être montés et démontés sans utilisation d'organes auxiliaires.

On sait que les meubles démontables nécessitent en général pour leur assemblage l'emploi d'outils et/ou d'organes auxiliaires ce qui présente certains inconvénients. Cependant des meubles déjà connus et tels que spécifiquement définis par le début de ce paragraphe tentent de remédier à ces inconvénients. Ils sont décrits notamment dans les brevets français nos 82 10374, 83 16178 et 88 04347, dans les brevets américains US 4,714,027 et 5,275,467 ainsi que dans la demande de brevet européen ayant le numéro de publication 0153426. La construction divulguée par cette dernière publication s'applique à une étagère et se distingue par le fait qu'elle comporte plusieurs cadres formés de quatre planches rectangulaires en bois massif disposées de chant et reliées par des assemblages à mi-bois renforcés ou remplacés par des éléments métalliques ou plastiques. Ces cadres sont superposés les uns au dessus des autres par des éléments de montants pourvus à leurs extrémités de doubles fourches, de sorte que cette combinaison d'assemblages forme des emboîtements tri-directionnels.

Des chaises, pouvant être montées sans utilisation d'organe auxiliaire, en utilisant des assemblages à mi-bois bidirectionnels non renforcés sont décrites dans la demande de brevet DE 44 21 338 et dans le brevet américain 3,547,491. Toutefois, en plus des assemblages à mi-bois bidirectionnels, ces chaises nécessitent l'emboîtement de certaines parties de leurs panneaux constitutifs dans des fentes pratiquées dans le corps d'un autre panneau constitutif. D'autre part, ces chaises nécessitent le respect d'un ordre de montage préétabli.

Un kit pour le montage et le démontage de meubles selon des configurations diverses, sans utilisation d'outils, principalement destiné aux enfants, est décrit dans le brevet US 4,582,002.

Enfin, une table à piétement constituée par deux panneaux comportant chacun deux pieds et montable sans outils est décrite dans le brevet US 2,235,290.

En regard de cet état de la technique, la présente invention propose un mode de construction de meubles démontables sans organes auxiliaires, qui se distingue des modes déjà connus par sa grande généralité d'emploi dans des meubles de toute forme et de toute fonction, par son esthétique améliorée, par sa rigidité et sa sécurité de fixation, par sa simplicité de mise en oeuvre et par son faible coût de fabrication.

Dans ce but, l'invention propose un meuble comportant un ensemble d'éléments rigides conformés de manière à pouvoir être montés et démontés sans utilisation d'organes auxiliaires, les dits éléments étant des panneaux munis de fentes transversales permettant de réaliser des assemblages de type mi-bois à emboîtement bi-directionnel, le montage du meuble étant réalisé exclusivement au moyen de tels assemblages et le maintien du meuble à l'état monté étant assuré exclusivement par les dits emboîtements, sans élément de blocage additionnel, meuble présentant les caractéristiques énoncées à la revendication 1 ou à la revendication 5.

Les assemblages du type mi-bois bidirectionnels sont particulièrement avantageux à réaliser car il suffit de pratiquer des entailles (par exemple à l'aide d'une machine à commande numérique) sur le pourtour des panneaux constitutifs du meuble, ces entailles étant beaucoup moins coûteuses à effectuer et pouvant être réalisées de façon beaucoup plus précise que des fentes dans le corps du panneau, puisqu'on intervient que sur le pourtour du panneau et non dans le corps du panneau lui-même.

Un autre avantage des meubles selon l'invention est que le montage du meuble peut s'effectuer sans ordre préétabli, le plus souvent de façon totalement aléatoire.

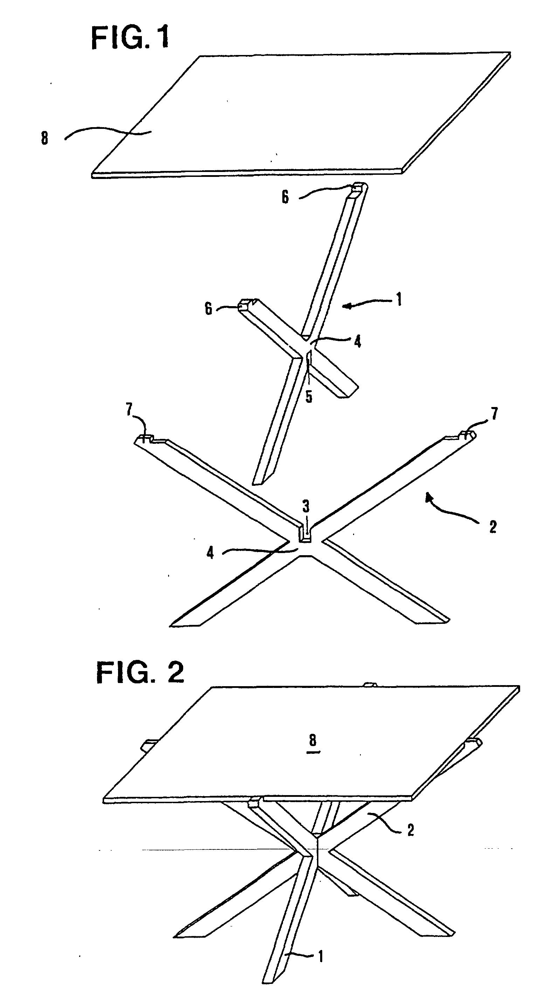

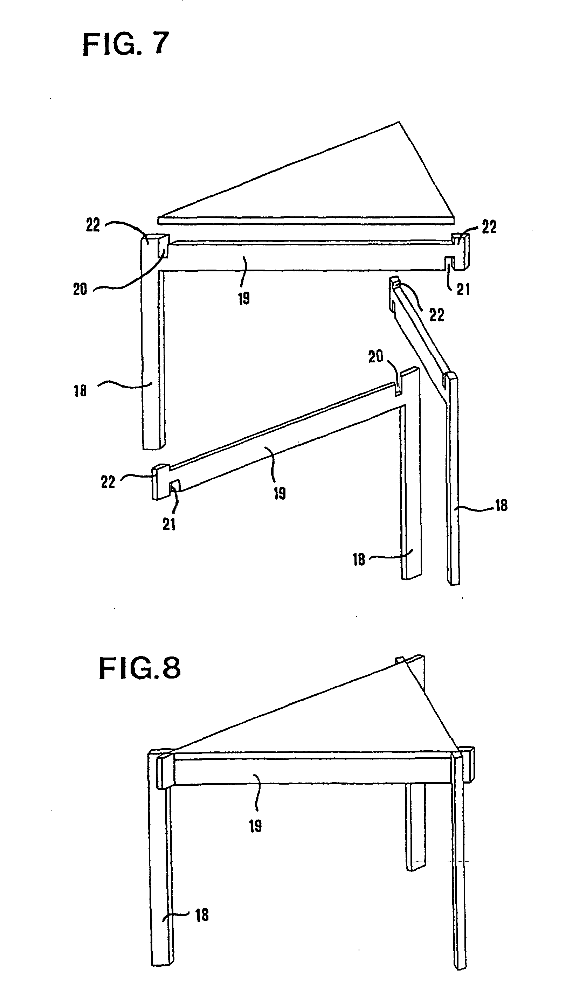

Plusieurs formes de réalisation du meuble selon l'invention sont décrites ci-après à titre d'exemples en référence aux figures 7 et 8, 12 et 13, 18 et 19, 24 à 28. Il convient de préciser que les figures 1 à 6, 9 à 11, 14 à 17 et 20 à 23 ne présentent pas des modes de réalisation particuliers de l'invention.
les figures 1 et 2 sont des vues en perspective éclatée et assemblée des éléments d'une table à piétement en X,
les figures 3 et 4 sont des vues également en perspective éclatée et assemblée d'une table à piétement en croix aux axes du plateau,
les figures 5 et 6 sont des vues également en perspective éclatée et assemblée d'une table à piétement standard,
les figures 7 et 8 sont des vues également en perspective éclatée et assemblée d'une table à trois pieds, formée d'éléments de piétement à un seul pied,
la figure 9 est une vue en perspective partiellement éclatée d'un lit,
les figures 10 et 11 sont des vues en élévation du lit de la figure 9 respectivement sans et avec un matelas,
les figures 12 et 13 sont des vues en perspective éclatée et à l'état monté d'un meuble de rangement modulable, étagère ou bibliothèque, constituant un autre exemple de mise en oeuvre de l'invention,
les figures 14 et 15 sont des vues également en perspective éclatée et assemblée d'un siège à accoudoir,
les figures 16 et 17 sont des vues en perspective éclatée et assemblée d'un siège du type chaise-longue,
les figures 18 et 19 sont des vues en perspective éclatée et assemblée d'une table rectangulaire à quatre pieds, formée d'éléments de piétement à un seul pied,
les figures 20 et 21 sont des vues également en perspective éclatée et assemblée d'une table ronde à quatre pieds, formée d'éléments de piétement à un seul pied,
les figures 22 et 23 sont des vues également en perspective éclatée et assemblée d'une table ronde à trois pieds, formée d'éléments de piétement à un seul pied, et
les figures 24 et 25 sont des vues également en perspective éclatée et assemblée d'une table à quatre pieds formée d'une variante d'éléments de piétement à un seul pied,
les figures 26 et 27 sont des vues également en perspective éclatée et assemblée d'un exemple de lit selon l'invention, et
la figure 28 est une vue en perspective éclatée d'un meuble de rangement modulable dans les trois dimensions.

La caractéristique principale des différents meubles représentés au dessin consiste dans le fait que des panneaux plats ou incurvés sont reliés entre eux par des assemblages de type mi-bois, à emboîtements bi-directionnels, qui assurent à eux seuls l'assemblage et la tenue du meuble et le support des charges reposant sur lui. De préférence, les panneaux sont en un matériau artificiellement structuré de manière à être rigides et à assurer que les fentes des assemblages de type mi-bois s'emboîtent pratiquement sans jeu et sans déformation de leurs bords. Ainsi une application particulièrement intéressante de l'invention consiste à utiliser des panneaux en bois feuilleté ou contre-plaqué. Pour un lit, ou une table, par exemple, comme on le verra plus loin, on pourra utiliser des panneaux de 15 mm d'épaisseur, formés de feuilles de 1 mm assemblées selon la technique usuelle du contre-plaqué. Ces panneaux peuvent être fabriqués en grandes dimensions et découpés aux dimensions voulues avec la précision requise. Ils peuvent aussi être cintrés ou galbés selon les besoins. Des techniques d'usinage connues permettent de satisfaire aux exigences de ce type de construction.

Au lieu de bois contre-plaqué on peut aussi utiliser pour la réalisation des panneaux décrits des compositions homogènes ou mélangées de métal, de verre, de matière plastique, de carton, papier ou bois aggloméré, de fibres ou de stratifiés. Les panneaux peuvent être opaques, translucides ou transparents. Ils peuvent être pleins ou présenter des vides d'air, par exemple une structure cellulaire. Ils peuvent être perforés ou former des grilles, des faisceaux de fils ou barres, etc. Les éléments composant les meubles selon l'invention peuvent également être réalisés par moulage.

Le dessin illustre différents exemples d'exécution de meubles construits selon l'invention.

Les figures 1 et 2 montrent une table carrée avec un piétement formé de deux éléments en X. Deux panneaux 1 et 2 ayant la forme d'un X, de mêmes dimensions, sont obtenus par découpage ou moulage. Les deux panneaux sont identiques excepté le fait que le panneau 2 présente une fente verticale 3 dans la moitié supérieure de la zone centrale 4 du X tandis que le panneau 1 présente une fente verticale 5 dans la moitié inférieure de la dite zone 4. Chacune de ces fentes s'étend depuis le bord correspondant, supérieur pour la fente 3 inférieur pour la fente 5, de la zone 4 jusqu'au centre de cette zone. Dans son fond, chaque fente peut présenter un léger bossage pour assurer l'appui central des deux pièces au montage. Les extrémités supérieures des branches des panneaux de piétement 1 et 2 présentent des rebords 6 et 7 dont la hauteur est égale à l'épaisseur du troisième panneau constitutif 8 de la table. Ce dernier est un plateau, de forme carrée dans l'exemple décrit.

En prévoyant des formes et des dimensions différentes pour les deux panneaux de piétement 1 et 2, on peut réaliser une table rectangulaire. D'autre part au lieu du plateau carré ou rectangulaire 8 on peut prévoir toute autre forme telle que ronde, ovale ou polygonale.

La figure 2 montre la table à l'état monté.

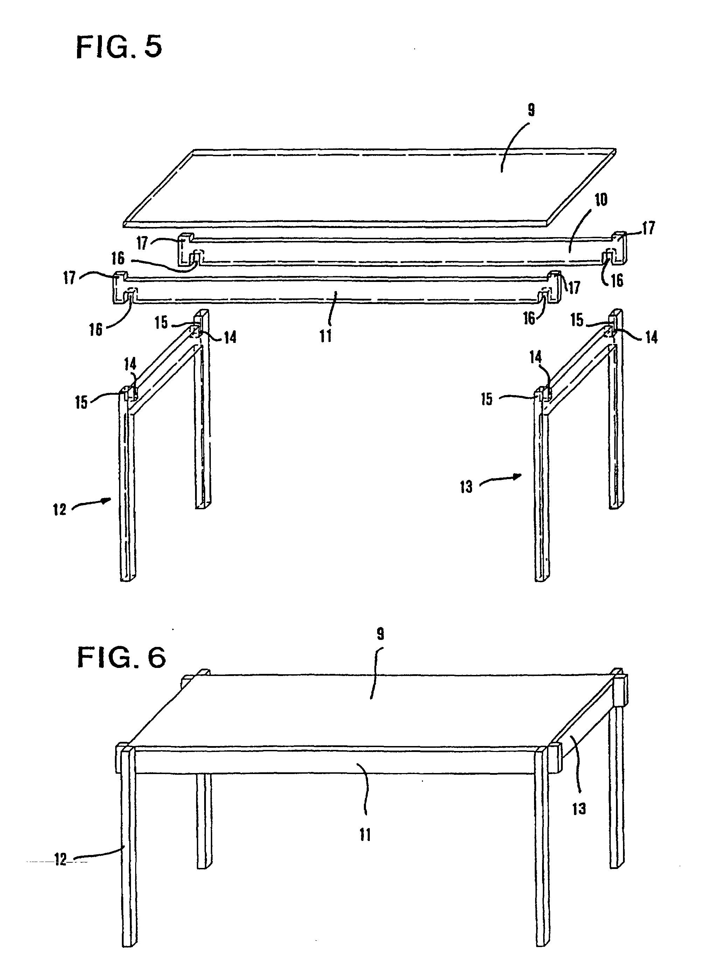

Les figures 5 et 6 montrent un exemple d'une table à plateau rectangulaire 9 supporté par deux longerons 10 et 11 et deux éléments de piétement 12 et 13. Ces derniers sont des pièces identiques. Ils sont découpés à un contour formant-deux pieds parallèles et une partie intermédiaire reliant les pieds à leur extrémité supérieure. Chaque élément de piétement présente deux fentes de type mi-bois 14 dans la moitié supérieure de la partie intermédiaire, aux extrémités de celle-ci, et des rebords 15 de hauteur égale à l'épaisseur du plateau 9 en dehors des fentes. De même les longerons 10 et 11 présentent des fentes de type mi-bois 16 dans leur bord inférieur, à leurs extrémités, et des rebords 17 en dehors des fentes, sur leur bord supérieur. Les largeurs des longerons et des parties intermédiaires des piétements, ainsi que l'épaisseur des éléments constitutifs sont calculés de manière que l'emboîtement des assemblages de type mi-bois assure la rigidité de la table.

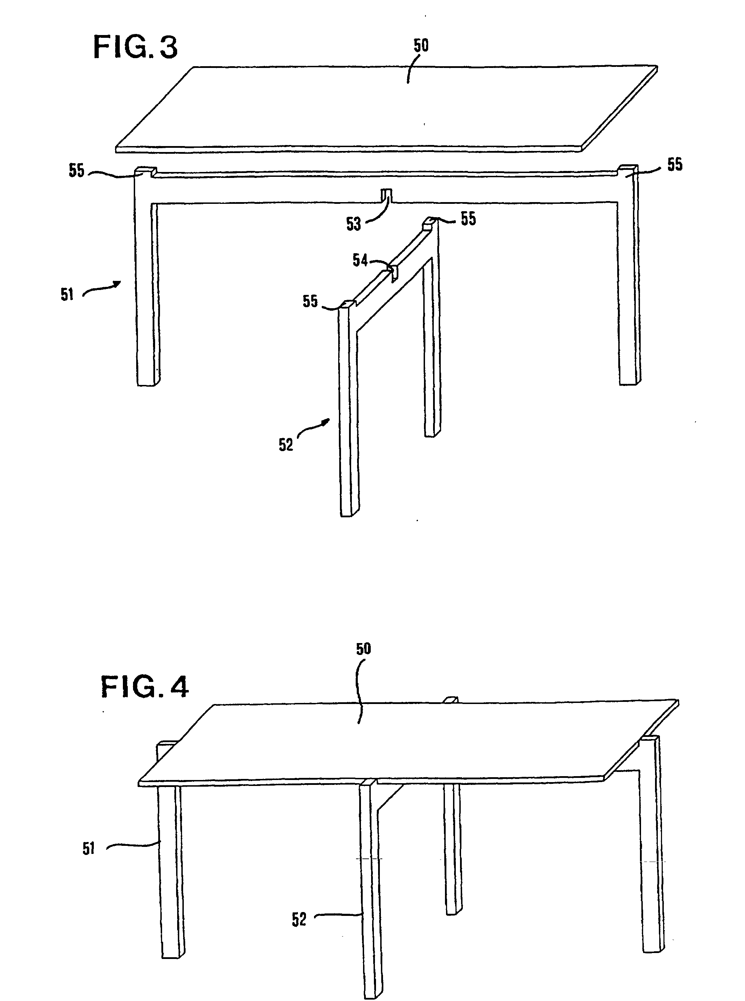

Les figures 3 et 4 montrent une table à plateau rectangulaire 50 avec un piétement simplifié, formé de deux éléments en croix aux axes du plateau. Les deux éléments de piétement 51 et 52 sont découpés à un contour formant deux pieds parallèles et une partie intermédiaire reliant les pieds à leur extrémité supérieure. L'élément de piétement 51 comporte une fente verticale 53 de type mi-bois pratiquée dans la moitié inférieure de la zone centrale de sa partie intermédiaire, destinée à coopérer avec une fente verticale 54 également de type mi-bois pratiquée dans la moitié supérieure de la zone centrale de la partie intermédiaire de l'élément de piétement 52. Les parties intermédiaires des éléments de piétement 51 et 52 présentent des rebords 55 dont la hauteur est égale à l'épaisseur du plateau 50.

Les figures 7 et 8 se rapportent à un exemple d'un meuble de type escabeau, table ou support, à trois pieds. Ce meuble comporte trois éléments de piétement en forme de L. Chacun de ces éléments de piétement comporte un pied 18 et une partie intermédiaire 19 s'étendant latéralement à l'extrémité supérieure du pied. Dans cette partie intermédiaire 19 une fente de type mi-bois 20 est prévue au voisinage du pied dans le bord supérieur et une seconde fente de type mi-bois 21 dans le bord inférieur, au voisinage de l'extrémité opposée au pied. Les deux fentes 20 et 21 sont donc dans ce cas inversées l'une par rapport à l'autre. D'autre part des rebords 22 sont prévus aux deux extrémités du bord supérieur de la partie intermédiaire. Ainsi pourvus, les trois éléments de piétement peuvent être assemblés rigidement en forme de triangle équilatéral comme le montre la figure 8. On notera que les flancs des fentes de type mi-bois 20 et 21 ainsi que les rebords 22 doivent être usinés obliquement par rapport à la direction des côtés du triangle. Entre les rebords 22 et sur les tranches des parties intermédiaires vient se poser un plateau.

Un meuble de ce type à plus de trois pieds peut également être réalisé en utilisant plus de trois éléments de piétement à un seul pied et des plateaux de forme correspondante, soit carrée, ronde, ovale, pentagonale, hexagonale, etc.

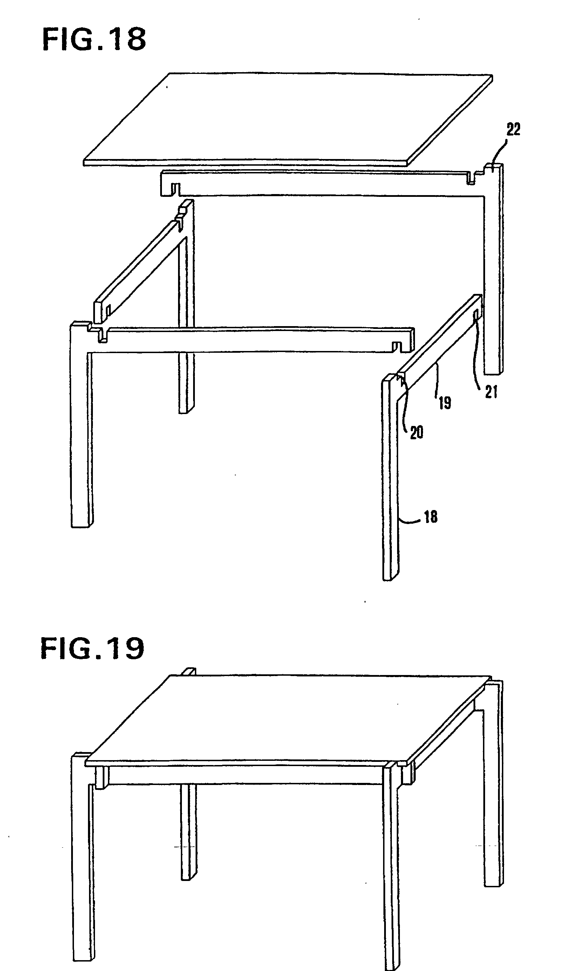

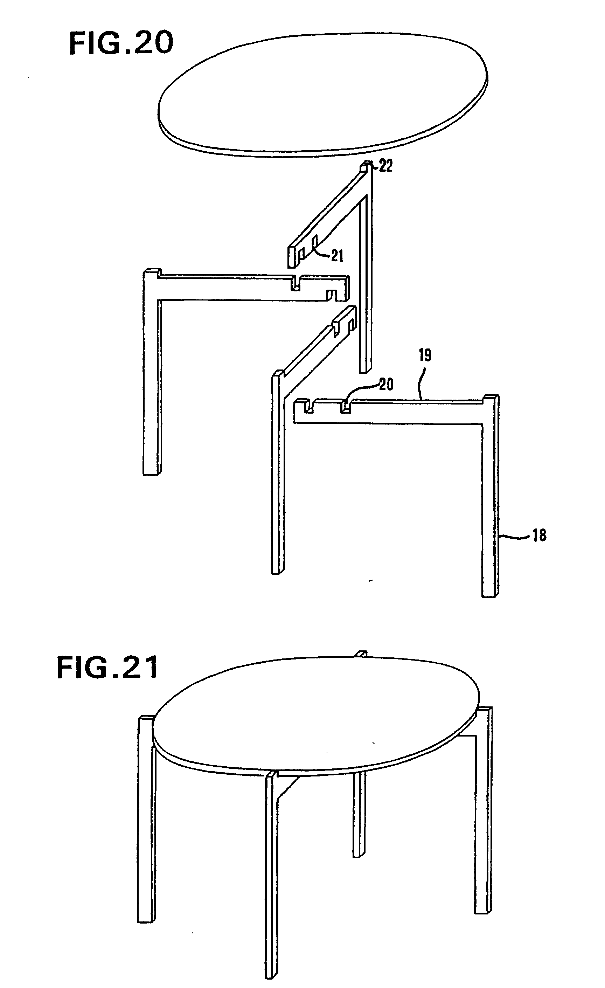

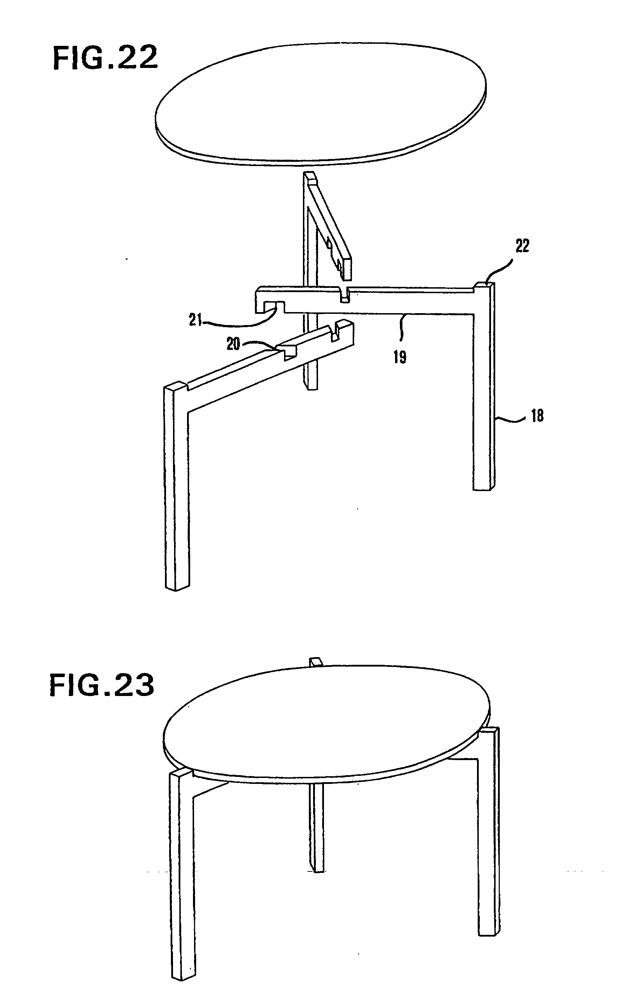

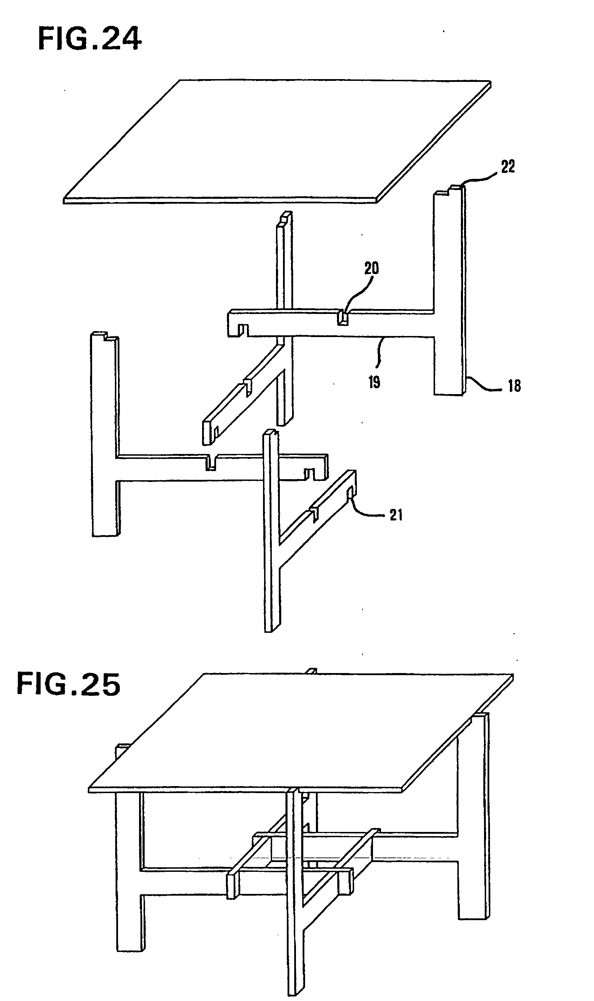

On a ainsi représenté une table rectangulaire à quatre pieds sur les figures 18 et 19, une table ronde à quatre pieds sur les figures 20 et 21 et une table ronde à trois pieds sur les figures 22 et 23. Une variante de table carrée de ce type, à quatre pieds, est représentée sur les figures 24 et 25. Dans cette variante, les parties intermédiaires latérales 19 de piétement sont disposées au tiers de la hauteur des pieds 18 et les fentes inversées 20 et 21 sont respectivement déplacées vers le centre de la table. Bien entendu toute autre combinaison quant à la position des parties intermédiaires latérales 19 et à la position des fentes inversées 20 et 21 est possible.

Ce type de meuble à piétement à un seul pied permet la réalisation de meubles particulièrement avantageux sur le plan statique. La stabilité de tels meubles est en effet plus grande due celle des meubles conventionnels, du fait d'une part du décalage angulaire des pieds et d'autre part du décalage des piétements par rapport aux axes de symétrie du meuble. De plus, il convient de noter que l'application d'assemblages de type mi-bois inversés à un ensemble d'éléments produit un résultat autobloquant.

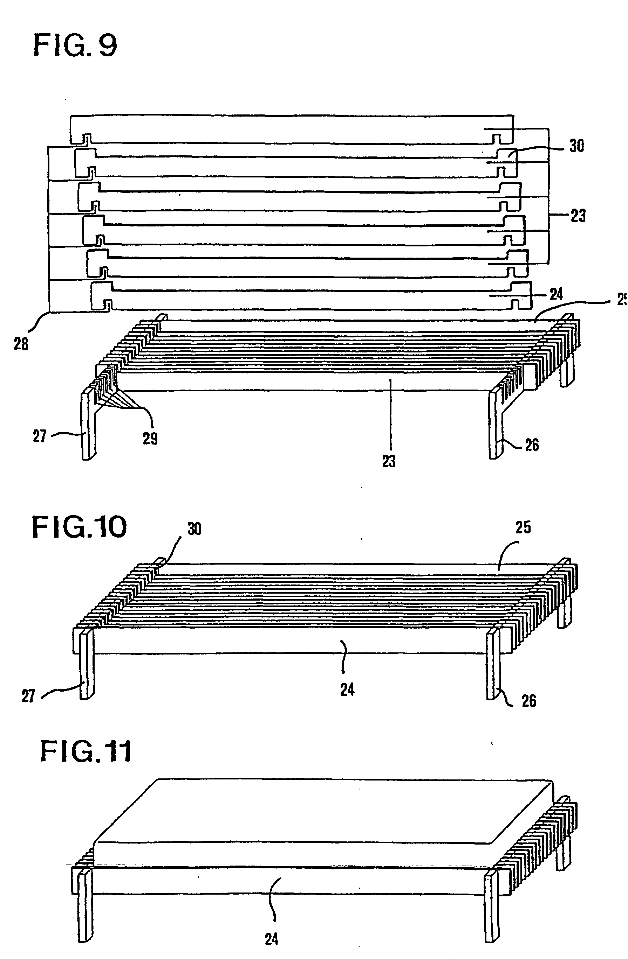

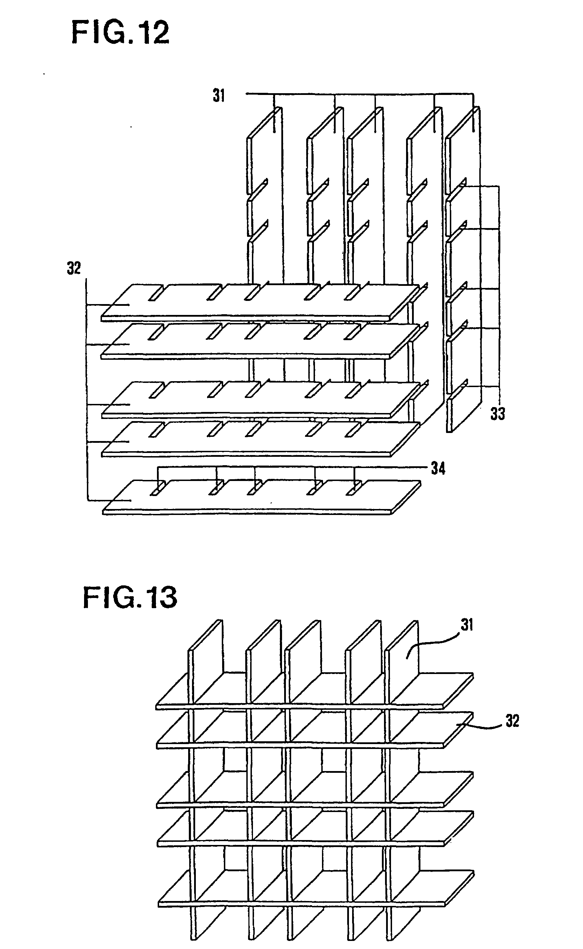

Les figures 9 à 11 montrent l'exemple d'un lit. Celui-ci consiste en un ensemble d'éléments longitudinaux 23 disposés verticalement et encadrés par deux éléments longitudinaux extérieurs 24 et 25. Tous ces éléments, qui jouent le rôle de sommier, sont reliés à deux éléments de piétement 26 et 27. Ces derniers sont semblables aux éléments 12 et 13 de la table des figures 5 et 6, leurs dimensions étant toutefois adaptées à l'emploi prévu et les parties intermédiaires étant pourvues dans leur bord supérieur d'une multiplicité de fentes de type mi-bois 29 correspondant aux éléments longitudinaux 23, 24 et 25. Ces derniers présentent de manière correspondante des fentes de type mi-bois 28 dans leur bord inférieur au voisinage de leurs deux extrémités, et comme on le voit à la figure 9, le montage se fait en plaçant les éléments longitudinaux 23, 24 et 25 dans des positions parallèles, de chant, de sorte que la multiplicité des assemblages confère à la structure du lit la rigidité nécessaire. Les bords supérieurs des éléments 23 forment des rebords d'extrémité 30 tandis que les éléments d'encadrement 24 et 25 ont sur toute leur longueur une largeur qui correspond à celle des extrémités des éléments 23. Un matelas, représenté à la figure 11, peut donc être placé sur les éléments 23 et sera supporté par eux alors que les éléments 24 et 25 et les rebords 30 l'encadrent. La disposition verticale des éléments longitudinaux 23 procurent à ce lit une solidité à toute épreuve.

Un lit du type de celui qui vient d'être décrit, comprenant un sommier comportant des éléments longitudinaux 23 disposés verticalement peut bien entendu également être avantageusement réalisé de façon conventionnelle, sans avoir recours à des assemblages de type mi-bois, les éléments longitudinaux constituant le sommier étant fixés sur les éléments de piétement ou sur des éléments transversaux formant les extrémités du sommier de toutes manières adéquates, en soi connues.

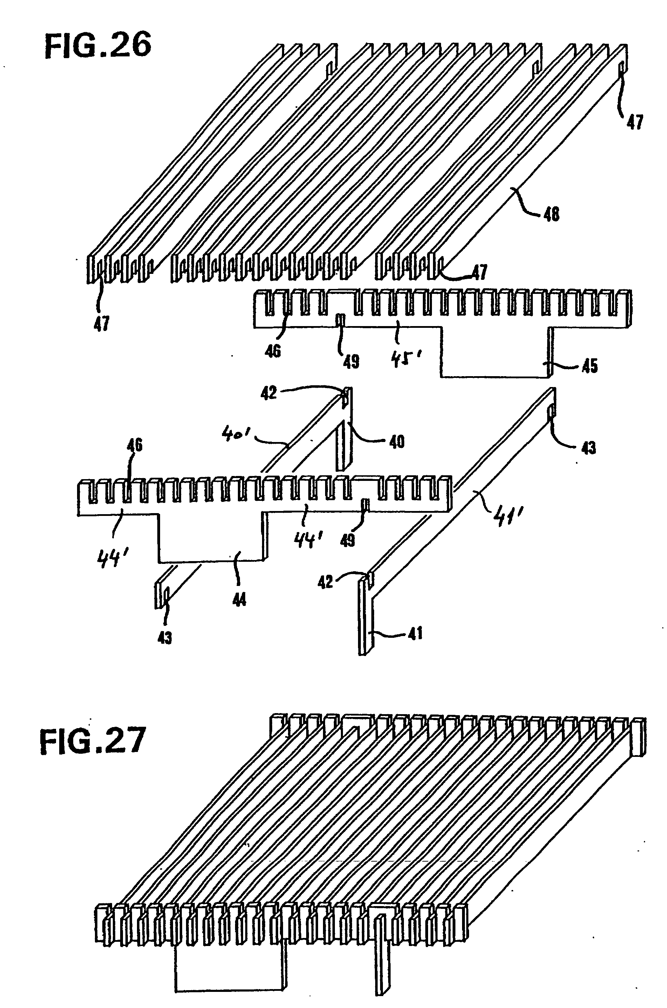

Selon un autre mode d'exécution représenté aux figures 26 et 27, un lit à lattes verticales peut être réalisé en remplaçant d'uns part les éléments de piétement 26 et 27 du lit de la figure 9 par des éléments de piétement 44, 44' et 45, 45' en forme de T à un seul pied 44, 45, et d'autre part les éléments longitudinaux extérieurs 24 et 25 du lit de la figure 9 par des éléments de piétement 40, 40', 41, 41' à un seul pied 40, 41 et munis de deux fentes inversées 42, 43, les fentes supérieures 42 de chacun des piétements 40, 41 étant destinées à coopérer avec des fentes inférieures 49 des piétements 44 et 45, lesdits piétements 44 et 45 étant munis d'une pluralité de fentes supérieures 46 destinées à coopérer d'une part avec les fentes 47 des éléments longitudinaux 48 du lit et d'autre part avec les fentes inférieures 43 des éléments de piétement 40, 41.

L'utilisation du principe de l'assemblage de type mi-bois combiné avec des matériaux technologiquement structurés pour présenter une bonne rigidité de forme et une grande facilité de découpage ou de moulage de précision, permet également de réaliser de manière très simple, comme on le voit aux figures 12 et 13, des étagères, bibliothèques ou autres meubles de rangement constitués exclusivement de panneaux plans rectangulaires allongés disposés verticalement et horizontalement et reliés par des assemblages de type mi-bois. Aux figures 12 et 13 les panneaux verticaux sont désignés par 31, les panneaux horizontaux par 32. La disposition des fentes 33 et 34 ressort clairement des figures et ne nécessite aucune explication.

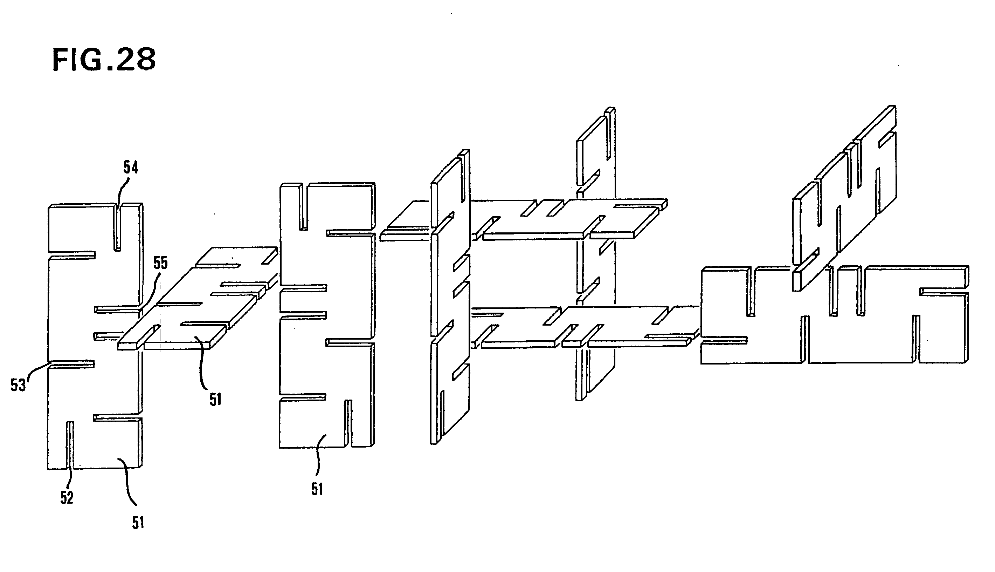

On peut également réaliser des étagères, bibliothèques ou autres meubles de rangement à l'aide de panneaux 51 comportant des fentes à mi-bois 52, 53, 54 et 55 réalisées sur plusieurs bords, notamment sur les quatre bords dans le cas de la figure 28, ce qui permet de réaliser des meubles modulaires multidirectionnels.

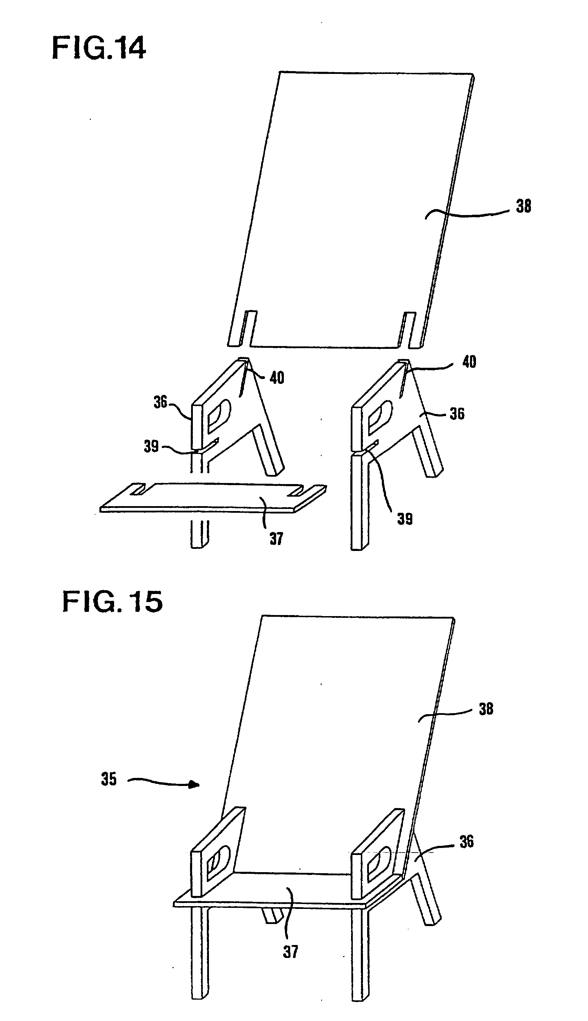

On montre encore aux figures 14 à 17 l'exécution de différentes sortes de sièges.

Le siège à accoudoirs 35 des figures 14 et 15 comprend deux éléments de piétement identiques 36 avec chacun deux pieds et une partie intermédiaire qui s'élève vers le haut et dont le bord supérieur forme un accoudoir, un placet 37 qui est un panneau plan rectangulaire dont la largeur dépasse de peu l'écartement entre les éléments de piétement et un dossier 38 de même largeur que le placet 37. Les éléments 36 présentent chacun deux fentes d'assemblages 39 et 40 pour recevoir d'une part le placet 37 et d'autre part le dossier 38 tandis que le placet et le dossier présentent de leur côté chacun deux fentes débouchant dans leur bord intérieur ou inférieur et correspondant aux fentes 39 pour le placet et 40 pour le dossier. Ainsi quatre assemblages de type mi-bois assurent la solidité de l'ensemble. On notera cependant que les deux assemblages du placet suffisent à le stabiliser.

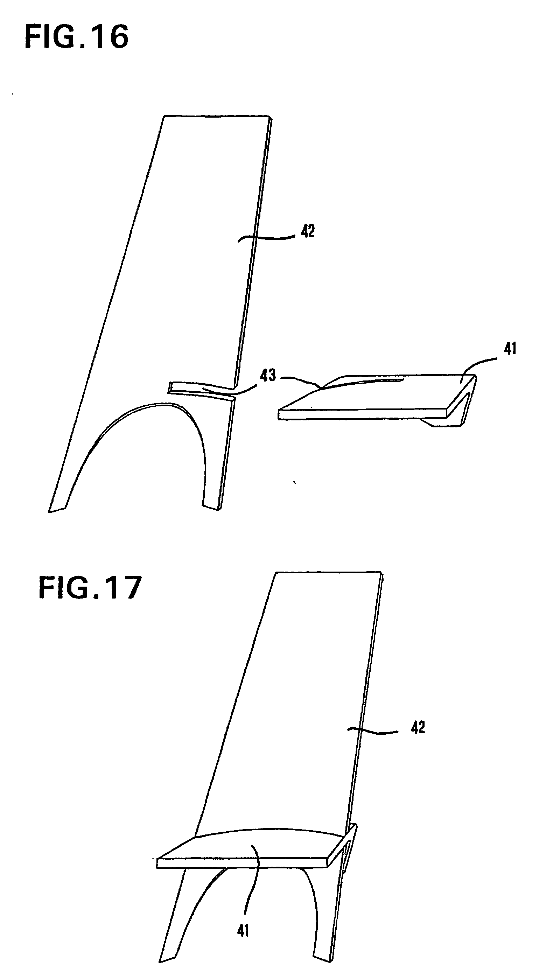

Les figures 16 et 17 montrent un siège du type chaise-longue très facilement démontable. Il est constitué de deux panneaux rigides 41 et 42 découpés et moulés à la forme galbée que montrent les figures, avec un seul assemblage de type mi-bois 43 situé sur l'arête de croisement des deux panneaux.

Ces exemples montrent la grande variété des applications possibles de l'idée à la base de l'invention permettant la réalisation de tout type de meubles. On peut ajouter à cela qu'au niveau de la fabrication des exécutions modulaires sont facilement possibles. Pour chaque type de meuble une ou plusieurs pièces peuvent être utilisées, conjointement avec des pièces complémentaires de différentes dimensions pour réaliser des séries de meubles de même type ne différant les uns des autres que par une dimension, par exemple la longueur, pour une table selon les figures 3 et 4, etc.

## Revendications

1. Meuble comportant un ensemble d'éléments rigides conformés de manière à pouvoir être montés et démontés sans utilisation d'organes auxiliaires, les dits éléments étant des panneaux (18, 19; 40, 41, 44, 45) munis de fentes transversales (20, 21; 46, 49) permettant de réaliser des assemblages de type mi-bois à emboîtement bi-directionnel, le montage du meuble étant réalisé exclusivement au moyen de tels assemblages et le maintien du meuble à l'état monté étant assuré exclusivement par les dits emboîtements, sans élément de blocage additionnel, **caractérisé en ce qu'**il comporte au moins trois panneaux de piétement, chaque panneau étant à pied unique (18; 40, 41, 44, 45) et comportant une partie intermédiaire (19; 40', 41', 44', 45') s'étendant latéralement d'au moins un côté du pied, **en ce que** cette partie intermédiaire présente au moins deux fentes d'assemblage de type mi-bois (20, 21; 46, 49) de manière à permettre de former un piétement complet par emboîtement des fentes des dits panneaux de piétement, et **en ce que** les deux dites fentes sont positionnées de façon inverse l'une part rapport à l'autre sur chaque panneau, l'une (20; 46) dans le bord supérieur de ladite partie intermédiaire et l'autre (21; 49) dans le bord inférieur de ladite partie intermédiaire, d'où il résulte une construction autobloquante dudit piétement.

2. Meuble selon la revendication 1, **caractérisé en ce qu'**il est constitué d'au moins trois panneaux de piétement (18) et d'un plateau agencé de manière à reposer à plat sur les dites parties intermédiaires.

3. Meuble selon la revendication 1, **caractérisé en ce qu'**il comporte deux panneaux de piétement (40, 41) disposés longitudinalement et deux panneaux de piétement (44, 45) disposés transversalement, les dits panneaux de piétement disposées transversalement supportant une pluralité d'éléments longitudinaux (48), pour la réalisation d'un lit.

4. Meuble selon la revendication 3, **caractérisé en ce que** les dits éléments longitudinaux (48), formant le sommier, étant disposés verticalement, l'assemblage des dits éléments longitudinaux avec les panneaux de piétement étant réalisé par des assemblages de type mi-bois.

5. Meuble comportant un ensemble d'éléments rigides conformés de manière à pouvoir être montés et démontés sans utilisation d'organes auxiliaires, les dits éléments étant des panneaux (31, 32; 51) munis de fentes transversales (33, 34; 52, 53, 54, 55) permettant de réaliser des assemblages de type mi-bois à emboîtement bi-directionnel, le montage du meuble étant réalisé exclusivement au moyen de tels assemblages et le maintien du meuble à l'état monté étant assuré exclusivement par les dits emboîtements, sans élément de blocage additionnel, **caractérisé en ce qu'**il est constitué exclusivement d'une pluralité de panneaux plans rectangulaires identiques (31, 32; 35) disposés verticalement et horizontalement, chaque panneau comportant une pluralité de fentes transversales (33, 34; 52, 53, 54, 55) destinées à la réalisation d'assemblage de type mi-bois, la disposition des fentes sur le panneau étant rythmée et asymétrique, les dimensions des panneaux, le nombre de fentes de chaque panneaux et la disposition des fentes sur chacun des panneaux étant identiques, toutes les fentes étant de mêmes dimensions.

6. Meuble selon la revendication 5, **caractérisé en ce que** les panneaux (31, 32) comportent des fentes (33, 34) sur un seul de leurs côtés, pour la réalisation de meubles de rangement modulables unidirectionnels.

7. Meuble selon la revendication 5, **caractérisé en ce que** les panneaux (51) comportent des fentes (52, 53, 54, 55) sur plusieurs côtés, pour la réalisation de meubles de rangement modulables multidirectionnels.

8. Meuble selon l'une des revendications précédentes, **caractérisé en ce que** dans chaque assemblage de type mi-bois la largeur des fentes est ajustée à l'épaisseur des panneaux et l'orientation des faces internes des fentes par rapport aux faces du panneau détermine l'angle dièdre entre les deux panneaux que l'assemblage de type mi-bois réunit.

9. Meuble selon l'une des revendications précédentes, **caractérisé en ce que** les panneaux sont en un matériau artificiellement structuré pour assurer une rigidité et une résistance maximales.

10. Meuble selon l'une des revendications 1 à 8, **caractérisé en ce que** les panneaux sont des panneaux en bois feuilleté ou contre-plaqué, des panneaux blocs ou des panneaux de particules.

11. Meuble selon l'une des revendications 1 à 8, **caractérisé en ce que** les panneaux sont en métal, en matière synthétique, en matériau composite, en papier, en carton ou en verre.

12. Meuble selon l'une des revendications 1 à 8, **caractérise en ce que** les panneaux sont en un matériau à structure cellulaire.

13. Meuble selon l'une des revendications précédentes, **caractérisé en ce que** chaque panneau présente une épaisseur constante au niveau de l'assemblage.

14. Meuble selon l'une des revendications précédentes, **caractérisé en ce que** les panneaux sont plats.

## Patentansprüche

1. Möbelstück, mit einer Anordnung aus steifen Bauteilen, die derart ausgestaltet sind, dass es ohne die Verwendung von Hilfsmitteln zusammengebaut und zerlegt werden kann, wobei die Bauteile Formteile (18,19; 40,41,44,45) sind, die mit quer verlaufenden Steckschlitzen (20,21;46,49) versehen sind um einen Zusammenbau in Form einer Verblattung mit beidseitigem Steckeingriff zu ermöglichen, wobei die Montage des Möbelstücks ausschliesslich durch einen derartigen Zusammenbau erfolgt und der Zusammenhalt des Möbelstücks im zusammengebauten Zustand auscchliesslich durch diese Steckverbindung gewährleistet wird ohne zusätzliche Halteteile, **dadurch gekennzeichnet, dass** es wenigstens drei Gestellformteile aufweist, wobei jedes Formteil mit nur einem Bein (18;40,41,45) versehen ist und ein Zwischenteil (19;40',41',44',45') aufweist, das sich seitlich ausgehend von wenigstens einer Seite des Beines erstreckt, dass das Zwischenteil mindestens zwei Steckschlitze (20,21;46,49) für einen verblatteten Zusammenbau derart aufweist, dass ein vollständiges Gestell durch Zusammenstecken der Schlitze der Gestellformteile gebildet wird und dass die beiden Schlitze jeweils entgegengesetzt zueinander in jedem Formteil angeordnet sind, wobei einer (20;46) im oberen Rand des Zwischenteils und der andere (21;49) im unteren Rand des Zwischenteils ausgebildet ist, sodass eine selbsthemmende Konstruktion des Gestells entsteht.

2. Möbelstück nach Anspruch 1, **dadurch gekennzeichnet, dass** es mindestens aus drei Gestellformteilen (18) besteht sowie aus einer Platte, die derart ausgestaltet ist, dass sie flach auf den Zwischenteilen ruht.

3. Möbelstück nach Anspruch 1, **dadurch gekennzeichnet, dass** es drei Gestellformteile (40, 41) aufweist, die in Längsrichtung angeordnet sind und zwei Gestellformteile (44,45), die in Querrichtung angeordnet sind, wobei die in Querrichtung angeordneten Gestellformteile eine Vielzahl von Längsteilen (48) aufnehmen um so ein Bett zu bilden.

4. Möbelstück nach Anspruch 3, **dadurch gekennzeichnet, dass** die Längsteile (48), die einen Lattenrost bilden, senkrecht ausgerichtet sind und dass der Zusammenbau der Längsteile mit den Gestellformteilen durch Verblattungen erfolgt.

5. Möbelstück, mit einer Anordnung aus steifen Bauteilen, die derart ausgestaltet sind, dass es ohne die Verwendung von Hilfsmitteln zusammengebaut und zerlegt werden kann, wobei die Bauteile Formteile (31,32;51) sind, die mit quer verlaufenden Steckschlitzen (33,34;52,53,54,55) versehen sind um einen Zusammenbau in Form einer Verblattung mit beidseitigem Steckeingriff zu ermöglichen, wobei die Montage des Möbelstücks ausschliesslich durch einen derartigen Zusammenbau erfolgt und der Zusammenhalt des Möbelstücks im zusammengebauten Zustand ausschliesslich durch diese Steckverbindung gewährleistet wird ohne zusätzliche Halteteile, **dadurch gekennzeichnet, dass** es ausschliesslich aus einer Vielzahl von identischen rechtwinkligen ebenen Formteilen (31,32;35) besteht, die senkrecht und waagrecht ausgerichtet sind, wobei jedes Formteil eine Vielzahl von quer verlaufenden Schlitzen (33,34;52,53,54,55) aufweist zur Erzielung eines Zusammenbaus mittels Steckverbindung, wobei die Anordnung der Schlitze in den Formteilen einMuster bildet und asymmetrisch ist, während die Abmessungen der Formteile und die Anzahl der Schlitze in jedem Formteil gleich sind und alle Schlitze die gleichen Abmessungen aufweisen.

6. Möbelstück nach Anspruch 5, **dadurch gekennzeichnet, dass** die Formteile (31,32) Schlitze (33,34) auf einer einzigen ihrer Seiten aufweisen zur Schaffung von in einer Richtung erweiterbaren Aufbewahrungsmöbeln.

7. Möbelstück nach Anspruch 5, **dadurch gekennzeichnet, dass** die Formteile (51) Schlitze (52,53,54,55) auf mehreren Seiten aufweisen zur Schaffung von in mehrere Richtungen erweiterbaren Aufbewahrungsmöbeln.

8. Möbelstück nach einem der vorhergehenden Ansprüche, **dadurch gekennzeichnet, dass** für jeden Zusammenbau mittels Verblattung die Breite der Schlitze angepasst ist an die Dicke der Formteile und die Ausrichtung der Innenseiten der Schlitze bezüglich der Seiten des Formteils den Raumwinkel bestimmt zwischen den beiden Formteilen, die durch das Verblatten miteinander verbunden werden.

9. Möbelstück nach einem der vorhergehenden Ansprüche, **dadurch gekennzeichnet, dass** die Formteile aus einem künstlich strukturierten Material bestehen zur Erzielung einer maximalen Steifigkeit und Festigkeit.

10. Möbelstück nach einem der Ansprüche 1 bis 8, **dadurch gekennzeichnet, dass** die Formteile Formteile aus Schichtholz, Sperrholz, Massivholz oder Spanholz sind.

11. Möbelstück nach einem der Ansprüche 1 bis 8, **dadurch gekennzeichnet, dass** die Formteile aus Metall, aus Kunststoff, aus Verbundwerkstoff, aus Papier, aus Karton oder aus Glas bestehen.

12. Möbelstück nach Ansprüchen 1 bis 8, **dadurch gekennzeichnet, dass** die Formteile aus einem Material mit Zellstruktur bestehen.

13. Möbelstück nach einem der vorhergehenden Ansprüche, **dadurch gekennzeichnet, dass** jedes Formteil eine konstante Dicke auf Höhe des zusammenzubauenden Abschnitts aufweist.

14. Möbelstück nach einem der vorhergehenden Ansprüche, **dadurch gekennzeichnet, dass** die Formteile eben sind.

## Claims

1. A piece of furniture comprising a set of rigid elements shaped so as to be able to be assembled and disassembled without the use of ancillary equipment, said elements being panels (18, 19; 40, 41, 44, 45) provided with transverse slots (20, 21; 46, 49) making it possible to effect joints of the half-lap type with bi-directional nesting, the assembly of the piece of furniture being effected exclusively by means of such joints and the piece of furniture being kept in the assembled state solely by the said nestings, without any additional locking element, **characterised in that** it comprises at least three base panels, each panel having a single leg (18; 40, 41, 44, 45) and having an intermediate part (19; 40', 41', 44', 45') extending laterally on at least one side of the leg, **in that** said intermediate part has at least two assembly slots (20, 21; 46, 49) of the half-lap type so as to allow formation of a complete base by nesting of the slots in the said base panels, and **in that** the two said slots are positioned in reverse fashion with respect to each other each on each panel, one (20; 46) in the top edge of the said intermediate part and the other (21; 49) in the bottom edge of the said intermediate part, from which results a self-locking construction of the said base.

2. A piece of furniture according to claim 1, **characterised in that** it comprises at least three base panels (18) and a top arranged so as to rest flat on the said intermediate parts.

3. A piece of furniture according to claim 1, **characterised in that** it comprises two base panels (40, 41) disposed longitudinally and two base panels (44, 45) disposed transversely, the said base panels disposed transversely supporting a plurality of longitudinal elements (48), for producing a bed.

4. A piece of furniture according to claim 3, **characterised in that** the said longitudinal elements (48), forming the bed base, are disposed vertically, the connection of the said longitudinal elements with the base panels being effected by joints of the half-lap type.

5. A piece of furniture comprising a set of rigid elements shaped so as to be able to be assembled and disassembled without the use of ancillary equipment, the said elements being panels (31, 32; 51) provided with transverse slots (33, 34; 52, 53, 54, 55) making it possible to effect joints of the half-lap type with bi-directional nesting, the piece of furniture being assembled solely by means of such joints and the piece of furniture being kept in the assembled state solely by the said nestings, without any additional locking element, **characterised in that** it consists solely of a plurality of identical rectangular flat panels (31, 32, 35) disposed vertically and horizontally, each panel having a plurality of transverse slots (33, 34; 52, 53, 54, 55) intended to effect joints of the half-lap type, the arrangement of the slots on the panel being rhythmical and asymmetric, the dimensions of the panels, the number of slots in each panel and the arrangement of the slots in each of the panels being identical, all the slots having the same dimensions.

6. A piece of furniture according to claim 5, **characterised in that** the panels (31, 32) have slots (33, 34) on only one of their sides for producing unidirectional modular storage furniture.

7. A piece of furniture according to claim 5, **characterised in that** the panels (51) have slots (52, 53, 54, 55) on several sides, for producing multi-directional modular storage furniture.

8. A piece of furniture according to one of the preceding claims, **characterised in that**, in each joint of the half-lap type, the width of the slots is adjusted to the thickness of the panels and the orientation of the internal faces of the slots with respect to the faces of the panel determines the dihedral angle between the two panels which the joint of the half-lap type joins.

9. A piece of furniture according to one of the preceding claims, **characterised in that** the panels are made from a material artificially structured to provide maximum rigidity and strength.

10. A piece of furniture according to one of claims 1 to 8, **characterised in that** the panels are panels made from laminated wood or plywood, blockboard or chipboard.

11. A piece of furniture according to one of claims 1 to 8, **characterised in that** the panels are made from metal, synthetic materials, composite material, paper, cardboard or glass.

12. A piece of furniture according to one of claims 1 to 8, **characterised in that** the panels are made from a material with a cellular structure.

13. A piece of furniture according to one of the preceding claims, **characterised in that** each panel has a constant thickness at the joints.

14. A piece of furniture according to one of the preceding claims, **characterised in that** the panels are flat.
